# EUROPÄISCHE PATENTSCHRIFT

(11) **EP 0 475 112 B1**
(45) Veröffentlichungstag und Bekanntmachung des Hinweises auf die Patenterteilung: **21.02.1996**
(21) Anmeldenummer: 91113745.3
(22) Anmeldetag: 16.08.1991
(51) Int. Cl.: C03B 23/09, C03B 23/11

(54) **Vorrichtung zur Formung eines Mündungsbereiches an einem Glasfläschchen**
Apparatus for making the neck of a small glass bottle
Appareil pour la formation du col d'une petite bouteille en verre

(30) Priorität: 11.09.1990 DE 4028823
(43) Veröffentlichungstag der Anmeldung: 18.03.1992
(60) Teilanmeldung: 95109973.8
(73) Patentinhaber: Schott Glaswerke, D-55122 Mainz (DE); Carl-Zeiss-Stiftung trading as SCHOTT GLASWERKE, D-55122 Mainz (DE)
(72) Erfinder: Männl, Reinhard, W-8596 Mitterteich (DE); Wolfrum, Alfons, W-8593 Tirschenreuth (DE); Neumeier, Franz, W-8594 Arzberg (DE)
(74) Vertreter: Dr. Fuchs, Dr. Luderschmidt Dr. Mehler, Dipl.-Ing. Weiss Patentanwälte

(56) Entgegenhaltungen:
- DE-A- 1 596 410
- DE-A- 1 796 100
- DE-C- 3 613 212

## Beschreibung

Die Erfindung betrifft eine Vorrichtung zur Formung eines Fläschchens, wobei der Mündungsbereich in ein offenes, wärmeerweichtes Ende eines Glasrohres geformt wird. Aus dem geformten Glasrohrende werden anschließend Fläschchen, wie Ampullen, Schnappdeckelgläser, Rollrandfläschchen etc. hergestellt.

Diese kleinen Fläschchen oder Ampullen werden aus Glasrohren in Fläschchenmaschinen hergestellt, in denen eine Vielzahl von Glasrohren um ihre eigene Längsachse gedreht gehalten und nach und nach einzelnen Formstationen zugeführt werden. An einer solchen Formstation wird auch der Mündungsbereich durch Einrollen des Glasrohrendes mittels einer oder mehrerer Formrollen gebildet.

Fläschchenmaschinen und Formstationen dieser Art sind aus den DE-PSen 15 96 410, 17 96 100 und 36 13 212 bekannt. Bei diesen Maschinen ist immer einer Formstation je ein Formfinger zugeordnet, der in ein von der Flächenmaschine herangefahrenes Glasrohr eingefahren und während des Einrollens des Glasrohrendes durch an der Formstation angeordnete Formrollen zur Unterstützung des wärmeerweichten Glases von innen bis zum Ende der Formgebung in dem Glasrohr gehalten wird. Die Formgebung kann an einer einzigen Formstation erfolgen, wobei die Fläschchenmaschine dann an dieser stoppt und erst nach erfolgter Formung wieder um eine Station weiterfährt. Statt dieses stop-and-go-Arbeitsprinzipes ist auch eine kontinuierliche Fertigung möglich, bei der dann z.B. vier Werkzeugstationen auf einer Formstation, z.B. an einer Kette geführt, umlaufen und dabei über einen Drehwinkel des Karussells equidistant mit jeweils einem vorbeigeführten Glasrohr mitfahren. Über diesen Winkel ist dann der Werkzeughalter bezüglich der Längsachse des vorbeigeführten Glasrohres stationär, wobei gleichzeitig mittels von jedem Werkzeughalter mitgeführten Formrollen und einem Formfinger die Formung des Mündungsbereiches erfolgt.

Aus der CA-C-581,053 ist eine Maschine zur Herstellung von Glasgegenstanden bekannt, bei der bei einem Glasrohr in einem bestimmten Abstand von dessen Ende an einer wärmeerweichten Stelle eine Einschnürung vorgenommen wird. Dabei werden Formfinger in das offene Ende des Glasrohres eingeführt und dienen mit ihren Enden als innere Abstützung für die Formrollen, die von außen den zu verformenden, wärmeerweichten Bereich des Glasrohres bearbeiten. Jedem auf dem Umfang eines Drehtisches angeordnete Spannfutter für ein Glasrohr ist ein Formfinger zugeordnet, der geradlinig von unten in das nach unten offene Ende des Glasrohres einführbar ist, wobei die Formfinger außerhalb des Drehtisches verfahrbar sind.

Da bei der Mündungsformung der Formfinger über längere Zeit in Kontakt mit dem wärmeerweichten Glas ist, muß der Formfinger aus einem hochwertigen wärmebeständigen Material hergestellt werden, wobei trotzdem aufgrund der Einsatzbedingungen ein häufiger Wechsel des Formfingers notwendig ist, wobei dann jedesmal die Fläschchenproduktion gestoppt werden muß. Auch bei der Verwendung von mehreren Formgebungsstationen, wie es in der DE-PS 15 96 410 beschrieben wird, ist der Verschleiß des Formfingers noch relativ groß und es tritt hier außerdem die Schwierigkeit auf, daß die mit den Formfingern umlaufenden Werkzeughalter alle bezüglich der Längsachse des jeweils vom Karussell herangeführten Glasrohres justiert werden müssen, damit eine saubere Mündungsformung gewährleistet ist. Ist die Justierung z.B. aufgrund von Verschleiß am Kettenantrieb der Werkzeughalter oder an einem Werkzeughalter selbst nicht mehr genau genug, so muß die gesamte Formstation mit den z.B. vier Werkzeughaltern als ganze Einheit überholt werden.

Der Erfindung liegt die Aufgabe zugrunde, eine Vorrichtung zu schaffen, mit der der Formprozeß einer Mündungsformung so geführt werden kann, daß der Verschleiß am Formfinger möglichst gering ist. Dabei soll insbesondere eine leichte Dejustierung des Formfingers bezüglich der Längsachse des zu formenden Glasrohres möglich sein.

Diese Aufgabe wird durch eine Vorrichtung der eingangs beschriebenen Art grundsätzlich durch die kennzeichnenden Merkmale des Anspruchs 1 gelöst.

Es hat sich gezeigt, daß zur Erhöhung der Verschleißfestigkeit eines Formfingers zwei Faktoren beitragen, nämlich einerseits die Zeit, in der der Formfinger in Kontakt mit dem wärmeerweichten Glas ist, im Verhältnis zu der Zeit, in der der Formfinger abkühlen kann, und andererseits die Form des Formfingers bzw. dessen Halterung selbst.

Bezüglich des "Arbeitsverhältnisses" des Formfingers hat es sich gezeigt, daß es besonders günstig ist, wenn jedem Glasrohr in einer Fläschchenmaschine ein Formfinger zugeordnet wird, so daß nach einem Einsatz des Formfingers zur Formung eines Mündungsbereiches der Formfinger über den restlichen Drehwinkel des Karussells bis zu Beginn des nächsten Formzyklusses abkühlen kann. Da eine Fläschchenmaschine normalerweise 12 bis 24 Glasrohre trägt, ist die Abkühlzeit des Formfingers bei dem erfindungsgemäßen Verfahren bzw. der entsprechenden Vorrichtung mindestens 3 mal so lang wie beim Stand der Technik, wobei gleichzeitig noch die Justierung des Formfingers bezüglich der Drehachse des zu formenden Glasrohres noch vereinfacht und verbessert ist.

Auf Grund der längeren Abkühlzeit kann erfindungsgemäß auch ein preiswertes, weniger hochtemperaturfestes Material wie z.B. Silberstahl (Werkstoffnummer nach deutschem Stahlschlüssel 1.2210) statt des bisher üblichen Tyrodur-Stahls (Werkstoffnummer 1.2842) verwendet werden.

Da dem Formfinger nur ein Glasrohr zugeordnet und mit dem Karussell drehfest verbunden ist, kann die Ein- und Ausfahrbewegung des Formfingers auch bei einem kontinuierlichen Lauf der Fläschchenmaschine in einer zweidimensionalen Bewegungslinie erfolgen, wie es bereits in der CA-C-581 053 vorgeschlagen wird. Durch diese Anordnung des Formfingers an dem Karussell der Fläschchenmaschine ist außerdem gewährleistet, daß der Formfinger immer in Phase mit dem zugeordneten Glasrohr ist, d.h. es muß keine Koordinierung der Lage bezüglich des jeweiligen Glasrohres erfolgen. Der Formfinger ist daher immer positionsgenau und kann mit einfachen Mitteln justiert werden.

Der Formvorgang eines Mündungsbereiches erfolgt normalerweise über mehrere Positionen des Karussells einer Fläschchenmaschine, wobei es vorteilhaft ist, das Glasrohrende mittels Brenner zwischendurch immer wieder zu erhitzen. Der Formfinger kann dabei bei der erfindungsgemäßen Vorrichtung ohne großen Aufwand kurzfristig aus dem Glasrohrende herausgezogen und nach der Erwärmung wieder eingefahren werden, so daß ein Überhitzen des Formfingers vermieden wird. Ein solches kurzfristiges Ein- und Ausfahren des Formfingers ist bei einer kontinuierlichen Fertigung gemäß dem Stand der Technik wegen des damit verbundenen erheblichen mechanischen Aufwandes und der dabei auftretenden Justierprobleme praktisch nicht möglich.

Gemäß der erfindungsgemäßen Vorrichtung zum Formen eines Mündungsbereiches in ein offenes, wärmeerweichtes Ende eines Glasrohres ist ein Karussell vorgesehen, das eine Vielzahl von sich um ihre eigene Längsachse drehbaren Glasrohren trägt und dabei im gleichen Teilungsabstand voneinander auf einer gemeinsamen Kreisbahn an einer Formstation vorbeiführt, die mittels einer Formrolle die Enden der Glasrohre sukzedan einrollt, wobei ein Formfinger das wärmeerweichte Ende des Glasrohres während des Einrollvorganges von innen unterstützt. In der Vorrichtung ist jedem Glasrohr ein Formfinger zugeordnet, wobei die Formfinger auf dem Karussell angeordnet sind. Erfindungsgemäß ist jeder Formfinger auf zwei Schlitten angeordnet, mittels derer der Formfinger in einer zweidimensionalen Bewegungslinie im wesentlichen Radial- und in Längsrichtung zu der Längsachse des zugeordneten Glasrohres verschiebbar ist. Dies ermöglicht eine besonders einfache Führung des Formfingers. Bei einer solchen Führung kann auch die Endposition des Formfingers leicht durch Einstellen der Endpositionen der einzelnen Schlitten justiert werden, wobei die eine Endposition des einen Schlittens (Horizontalschlitten) den Formfinger auf die Längsachse des zugeordneten Glasrohres bringt und der andere Schlitten (Vertikalschlitten) den Formfinger in das Glasrohrende hineinfährt, wobei der Formfinger sich in der richtigen Höhe bezüglich der Formrolle befindet, wenn der Vertikalschlitten in seiner Endposition ist. Der Horizontalschlitten ist notwendig, damit der Formfinger aus dem Bereich des Glasrohres geführt werden kann, damit dieses zur weiteren Bearbeitung in der Fläschchenmaschine nach unten abgebbar ist.

Vorteilhaft ist der Formfinger oder die Halterung des Formfingers speziell ausgestaltet, so daß der Verschleiß und damit auftretende Ungenauigkeiten bei der Mündungsformung weiter vermindert werden können.

Ein solcher Formfinger, der zum Innenformen eines Mündungsbereiches in ein offenes, wärmeerweichtes Ende eines Glasrohres, das von einer Formrolle eingerollt wird, geführt wird weist vorzugsweise eine vom üblichen kreisförmigen Querschnitt derart abweichende Querschnittsfläche auf, die nur noch einen oder mehrere Kreisabschnittsbereiche aufweist, die in Kontakt mit dem Innenumfang des Mündungsbereiches kommen und den Innenradius der Mündung bestimmen, wobei aber die Querschnittsfläche des Formfingers insgesamt so groß gehalten wird, daß das Verhältnis der Querschnittsfläche zur Länge des (oder der) Kreisabschnittsbereich(e) ≧ 0,55 r· ist, wobei r der Radius des Kreisabschnittsbereiches ist. Dies bedeutet, daß der Formfinger, der nur mit seinem(n) Kreisabschnittsbereich(en) mit dem wärmeerweichten Glasrohrende in Kontakt kommt, eine verhältnismäßig größere Querschnittsfläche zur Ableitung der während dieses Kontaktes auf den Formfinger übertragenen Wärmemenge hat, als ein Kreis mit gleichem Radius bzw. ein entsprechendes tortenförmiges Kreissegment. Durch diese Maßnahme kann der Formfinger die über seinen Kreisabschnittsbereich vom wärmeerweichten Glasrohrende übertragene Wärmemenge schneller an seine Halterung abführen als ein entsprechender zylinderischer Formfinger, wodurch bei diesem Formfinger bei sonst gleichen Betriebsbedingungen nur eine geringere Erhitzung auftritt. Vorteilhaft ist, wenn die Querschnittsfläche des Formfingers nicht unter die halbe Fläche des über die Kreisabschnittsfläche(n) gelegten Vollkreises reduziert wird, das heißt, wenn die Querschnittsfläche ≧ 0,5 r²·π ist, damit noch genügend Masse zur Wärmeabführung überhaupt vorhanden ist. Auch soll der Kreisabschnittsbereich nicht zu klein sein, damit eine genügende Glättung des Innenumfangs des Mündungsbereiches gewährleistet ist. Vorteilhaft ist ein Kreisabschnittsbereich von 60° bis 190°, wobei vorzugsweise der Kreisabschnitt in einem Bereich von 100° bis 150° gewählt wird. Hat der Formfinger z.B. zwei einander gegenüberliegende Kreisabschnittsbereiche, so liegen diese vorzugsweise jeweils im Bereich 100° bis 150°.

Zur Abstützung des unteren Glasrandes des wärmeerweichten Glasrohrendes hat der Formfinger an seinem unteren Ende vorzugsweise eine Auflage, die einen kreisförmige Umfangsfläche hat und konzentrisch zu dem Formfinger angeordnet ist, wobei der Radius dieser Auflage größer ist als der Radius des Kreisabschnittsbereiches. Eine stufenförmig profilierte Formrolle wird bei einem solchen Formfinger dann so angesetzt, daß der kleinere Formrollenradius an der Umfangsfläche dieser Auflage ansetzt und dabei mit dem Profilteil mit größerem Radius gegen den Kreisabschnittsbereich einen im Querschnitt im wesentlichen rechteckigen Hohlraum begrenzt, in dem das wärmeerweichte Glasrohrende zu einem Rollrand oder Bördelrand der Fläschchenmündung geformt wird. Der Radius des Kreisabschnitts bestimmt dabei wieder den Innenradius der Mündung, der größere Radius der Formrolle des Außenradius des Fläschchenhalses und der kleinere Radius der Formrolle den Außenradius des Rollrandes.

Üblicherweise richtet sich der Radius des Kreisabschnittes also nach dem gewünschten Innenradius der Mündung. Für Spezialanwendungen können Formfinger mit einem Radius zwischen 2 mm und 20 mm eingesetzt werden.

In einer besonderen Ausführungsform kann die Auflage, auf der das Glasrohrende aufsitzt, eine zum Zentrum hin abfallende Oberfläche haben. Hierdurch wird am oberen Fläschchenrand eine konische Spiegelfläche geformt. Die abfallende Oberfläche kann in einem Winkel von z.B. 5° oder 7° ausgeführt werden.

Die Umfangsfläche der Auflage kann auch an dem Bereich, an dem die Formrolle ansetzt eine Aussparung aufweisen, so daß der Radius der Auflage in diesem Bereich etwas verkleinert ist. Dies ermöglicht eine Verkleinerung des Außendurchmessers des Fläschchenrandes, da die Formscheibe hier näher an den Formfinger dringen kann.

Mit einem derartigen Formfinger lassen sich in dem zu formenden Mündungsbereich des Fläschchens auch Hinterschneidungen herstellen. Hierzu hat der obere Teil des Kreisabschnittsbereiches dann einen erweiterten vorstehenden Rand, der als Stufe oder als Schräge ausgebildet sein kann und entsprechend einen zweiten Kreisabschnittsbereich mit größerem Radius als der erste Kreisabschnittsbereich darstellt, wobei beide Kreisabschnittsbereiche konzentrisch angeordnet sind. Bei einem solchen Formfinger ist dann auch der hintere Bereich gegenüber einem Vollzylinder freigefräst, so daß der Formfinger nach vollendeter Formung zuerst etwas in radialer Richtung von der Kontaktstelle Kreisabschnittsbereich/Innenumfang der Mündung zurückgeschoben werden kann, um dann ohne Berührung der Mündung herausgezogen zu werden. Ein solcher Formfinger wird bevorzugt in Zusammenwirkung mit nur einer Formrolle eingesetzt, da bei der bisher allgemein üblichen Verwendung von zwei Formrollen zwei entsprechend ausgebildete gegeneinander verschiebbare Formfingerhälften verwendet werden müßten, die, damit sie gegeneinander zusammenschiebbar sind, eine nur sehr geringe Querschnittsfläche bezüglich eines entsprechenden Vollkreises aufweisen können, wodurch eine genügende Ableitung der Wärme nicht mehr in jedem Fall sicher gewährleistet ist.

Die oben beschriebenen Ausführungsformen des erfindungsgemäßen Formfingers sind insbesondere bei der Verwendung nur einer Formrolle mit Vorteil einsetzbar. Sollen zwei Formrollen um 180° am Glasrohr versetzt dieses einrollen, so ist der vorteilhafte Formfinger in einer D₂ₕ-Symetrie (Symmetrie des Querschnitts) auszuführen, wobei zwei sich gegenüberliegende Kreisabschnittsbereiche dann den Formrollen zugeordnet sind. Insbesondere bei der Herstellung einer Mündung mit einem hinterschnittenen Bereich ist jedoch die Verwendung von nur einer Formrolle und ein Formfinger mit C₂ᵥ-Symmetrie besonders günstig, da dann keine aufwendigen Mittel zum gegeneinanderschwenken oder verschieben von zwei Formfingern in der Mündung notwendig sind.

Zur Kühlung kann der Formfinger im Betrieb mit Öl übersprüht werden, das praktisch über den ganzen Formfinger ablaufen kann und zweckmäßigerweise in einer direkt unter dem Formfinger liegenden Ölauffangwanne gesammelt und von dieser abgeleitet wird.

Als weitere Möglichkeit zur Verbesserung des Formvorganges und Minderung des Verschleißes kann der Formfinger auch mit etwas horizontalen Spiel ausgebildet sein, bzw. mit einem solchen Spiel in das wärmeerweichte Glasrohrende eingefahren werden. Das horizontale Spiel erlaubt eine weitgehend freie Bewegung des Formfingers radial zur Längsachse des Glasrohres. Dies erreicht man z.B. indem der Formfinger auf eine Gelenklagerung gesetzt wird. Diese Anordnung kann wahlweise mit den zuvor beschriebenen Maßnahmen kombiniert werden. Der Formfinger, der zur Formung des Mündungsbereiches in das offene, wärmeerweichte Ende des Glasrohres einbringbar und nach der Formung aus diesem wieder herausziehbar ist und während der Formung zur Unterstützung des wärmeerweichten Endes des Glasrohres von innen gegen die das Glasrohrende von außen einrollende Formrolle dient, ist vorzugsweise über einen Haltezapfen mit einem Gelenklager verbunden, der zur Begrenzung seines Schwenkradiusses in einem Lagerteil geführt ist und damit den Schwenkradius des Formfingers bestimmt. Als günstig hat sich diese Bewegungsfreiheit des Formfingers in einem Bereich von maximal ± 1,0 mm, vorzugsweise bis zu ± 0,5 mm) bezüglich seiner Normalachse herausgestellt.

Mit einem solchen Formfinger läßt sich ein Fläschchen formen, bei dem dann zuerst der Mündungsbereich in ein offenes, wärmewerweichtes Ende eines Glasrohres mittels einer Formrolle und des Formfingers geformt wird, der zur Formung des wärmeerweichten Endes des Glasrohres und zur Unterstützung desselben gegen die Formrolle vor dem Formvorgang in das Glasrohrende eingefahren und danach wieder herausgefahren wird. Anschließend wird das Glasrohrende vom Glasrohr abgetrennt und zu einem fertigen Fläschchen durch Bildung eines Fläschchenbodens geformt. Erfindungsgemäß wird bei diesem Verfahren der Formfinger mit horizontalem bzw. radialem Spiel in das wärmeerweichte Glasrohrende eingebracht und dort durch das eingerollte Glasrohrende zentriert.

Um ein Mitrotieren des Formfingers mit dem Glasrohr zu vermeiden, ist ein Sperrelement vorgesehen, das z.B. ein Sperrstift in dem Gelenklager sein kann.

Zum Einfahren des Formfingers in das Glasrohrende sitzt das Lagerteil wiederum auf einem Vertikalschlitten, der seinerseits auf einem Horizontalschlitten angeordnet ist, so daß der Formfinger einerseits in radialer Richtung und andererseits in Längsrichtung der Achse des Glasrohres verschiebbar ist und damit nicht allein in das Glasrohrende ein- und wieder ausgefahren werden kann, sondern auch ganz aus dem vertikalen Aktionsbereich des Glasrohres und dazugehöriger Glasrohr-Aufnahmevorrichtungen herausfahrbar ist.

Um eine Verschmutzung der Schlitten bzw. der ganzen Fläschchenmachine mit Formöl zu vermeiden, ist unterhalb des Formfingers zweckmäßigerweise eine Ölauffangwanne angeordnet. Die Ölauffangwanne kann wie oben beschrieben mit dem Formfinger verbunden sein und ist dann mit diesem beweglich, günstiger ist hier jedoch die Anordnung der Ölauffangwanne in dem Lagerteil, wobei die Ölauffangwanne als ein ringförmiger Kanal mit einem Ablauf ausgebildet ist. Der Kanal erstreckt sich hierbei bis unterhalb einer als vorstehender Kragen ausgebildeten Auflage für das Glasrohr, deren Funktion oben beschrieben ist, so daß das ablaufende Formöl und auch eventuelle Glassplitter trotz der horizontalen Bewegungsfreiheit des Formfingers in die Ölauffangwanne gelangen können. Dies hat auch den Vorteil, daß das unterhalb des Formfingers angeordnete Gelenklager vor Verunreinigungen geschützt ist.

Wie oben beschrieben, hat der Formfinger auch hier günstigerweise eine vom Vollzylinder abweichende Form. Aufgrund der Bewegungsfreiheit sollte der Querschnitt des Formfingers hier jedoch auch bei Verwendung von nur einer Formrolle eine Dₚₕ-Symmetrie (p= 2,3,4...), vorzugsweise eine D₂ₕ-Symmetrie oder aber in dem 180°-Bereich der Mündung, der mindestens 90% vom Berührungspunkt mit der Formrolle entfernt ist, mindestens einen das Innere der Mündung abstützenden Kreisabschnittsbereich, haben, damit eine Zentrierung des Formfingers möglich ist. Zweckmäßigerweise hat der Formfinger die Form eines beidseitig abgeflachten Zylinders mit zwei verbleibenden Kreisabschnittsbereichen von vorzugsweise 100° bis 150°. Als besonders günstig haben sich Kreisabschnittsbereiche von ca. 135° erwiesen. Die oben und hier beschriebenen, vom Vollzylinder abweichenden Formfinger haben neben den besseren Wärmeableiteigenschaften noch den Vorteil, daß das Formöl, das oben auf den Formfinger aufgetropft wird, während der Formung der Mündung an den Freifräsungen besser ablaufen kann. Das zu formende Glas kann daher an den Kreisabschnittsbereichen besser anliegen.

Wie oben beschrieben, kann der in gewissen Grenzen horizontal frei bewegliche Formfinger auch in Verbindung mit einer nur einseitig auf das Glasrohr einwirkenden Formrolle verwendet werden. Eine Federung, die den Formfinger in seiner mittleren Normalstellung hält, ist nicht notwendig. Dies gelingt auch bei dem einseitigen Druck von nur einer Formrolle, da hier das sich drehende eingerollte Glasrohrende den Formfinger an seiner Rückseite gegen den von der Formrolle ausgeübten Druck unterstützt. Dabei ist auch weiterhin eine Anfederung der Formrolle und Formung unter Federdruck möglich.

Ausführungsbeispiele der Erfindung sind in den Zeichnungen dargestellt und werden im folgenden näher beschieben.

Es zeigen
- Fig. 1: einen Auschnitt aus einer Fläschchenmaschine mit einem erfindungsgemäß angeordneten Formfinger;
- Fig. 2: einen Schnitt durch einen erfindungsgemäßen Formfinger;
- Fig. 3: eine Seitenansicht eines erfindungsgemäßen Formfinger mit einer Auflage;
- Fig. 4: einen Schnitt durch den Formfinger gemäß Figur 3 entlang der Linie IV-IV während eines Formprozesses; und
- Fig. 5: einen Formfinger mit Gelenklager.

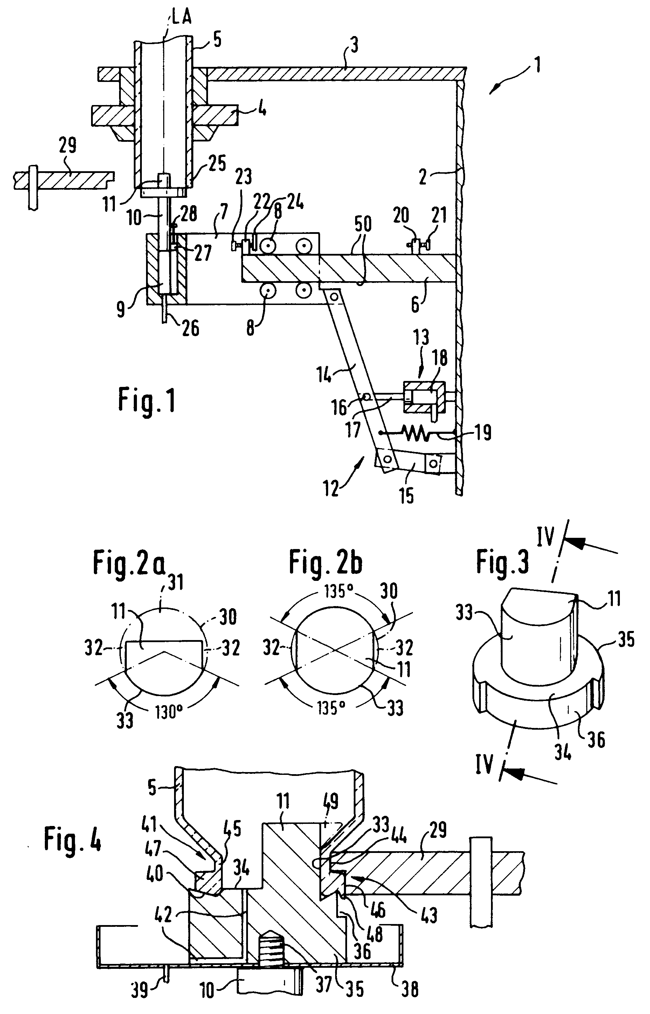

In Figur 1 ist eine Fläschchenmaschine 1 ausschnittsweise in einer Position zu Beginn einer Mündungsformung dargestellt. Die Fläschchenmaschine 1 weist als Grundkörper ein hier ebenfalls nur teilweise dargestelltes Karussell 2 auf, das über den äußeren Umfang einer oberen Ebene 3 in regelmäßigen Teilungsabständen drehbare Aufnahmevorrichtungen 4 (nur eine ist dargestellt) für jeweils ein Glasrohr 5 trägt.

Auf einer mittleren Ebene 6 sitzt ein Schlitten 7, der über Laufrollen 8 schienengeführt 50 ist. Die Schienenführung ist radial zur Längsachse LA des Glasrohres 5 ausgerichtet. Am vorderen Ende des Schlittens 7 ist ein Zylinder 9 so befestigt, daß ein in dem Zylinder 9 verschiebbar angeordneter Kolben 10 längs zur Längsachse LA des Glasrohres 5 ausgerichtet ist. Am oberen Ende des Kolbens 10 ist ein Formfinger 11 befestigt.

Der Schlitten 7 ist über eine Hebelübersetzung 12 mittels einer Kolbenzylinderkombination 13 verschiebbar. Hierzu ist das obere Ende eines langen Hebels 14 am hinteren Ende des Schlittens 7 und das untere Ende des langen Hebels 14 an einem Ausgleichstück 15 angelenkt, das wiederum an dem Karussell 2 angelenkt ist. Die Kolbenzylinderkombination 13 ist mit ihrem zylinderseitigen Ende ebenfalls am Karussell 2 angelenkt und wirkt über ein mit dem Kolben 17 verbundenes Drehgelenk 16 auf den mittleren Bereich des langen Hebels 14. Die Kolbenzylinderkombination 13 kann hydraulisch oder pneumatisch betätigt werden. Zum Zurückfahren des Schlittens 7 wird die Kolbenzylinderkombination drucklos gestellt, wobei dann eine mit dem Karussell 2 verbundene und auf den langen Hebel 14 wirkende Zugfeder 19 den Schlitten 7 zurückzieht und dabei den Kolben 17 in den Zylinder 18 hineinschiebt. Der Schlitten 7 fährt dabei in Richtung auf das Karussellinnere bis zu einem Anschlag 20 zurück. Der Anschlag 20 weist ein Stellglied 21 auf, mit dem die Rückfahrstrecke des Schlittens 7 gerade so begrenzt werden kann, daß alle vom Schlitten 7 getragene Teile außerhalb des Aktionsbereiches des Glasrohrs 5 und ggf. auch außerhalb dessen Aufnahmevorrichtungen kommen.

Zum Vorfahren des Schlittens 7 wird die Kolbenzylinderkombination 13 z.B. mit Pressluft beaufschlagt, wodurch der Kolben 17 ausfährt und den Schlitten 7 mit dem Formfinger 11 in Richtung auf die Längsachse LA des Glasrohrs 5 verschiebt. Hierzu ist die Schiene 50 radial zur Längsachse LA des Glasrohres 5 bzw. der Aufnahmevorrichtung 4 montiert. Damit der Formfinger 11 bzw. der Kolben 10, an dem er befestigt ist, genau auf die Längsachse LA des Glasrohrs 5 kommt, ist an der mittleren Ebene 6 ein Anschlag 22 vorgesehen, der über ein Stellglied 23 auf ein mit dem Schlitten 7 verbundenes Widerlager 24 wirkt. Mit dem Stellglied 23 kann der Kolben 10 mit dem Formfinger 11 genau auf die Längsachse LA justiert werden.

Sobald der Schlitten 27 seine äußere Endposition erreicht hat und damit den Formfinger 11 auf die Längsachse LA gebracht hat, kann dieser mittels des Kolbens 10 in das unteres Glasrohrende 25 eingeschoben werden. Hierzu wird der Zylinder 9 über seinen Anschluß 26 mit einem Fluid, z.B. Pressluft, beaufschlagt, wodurch der Kolben 10 soweit ausfährt, bis ein Widerlager 27 an einem Stellglied 28 anschlägt, das so eingestellt ist, daß sich der Formfinger 11 in einer gewünschten Höhe bezüglich des unteren Glasrohrendes 25 und einer Formrolle 29 befindet. In dieser Position kann dann die Formrolle 29 das untere Glasrohrende 25 gegen den Formfinger 11 einrollen. Das Widerlager 27 verhindert dabei gleichzeitig ein Mitdrehen des Formfinger 11 mit dem gedrehten Glasrohr 5.

Nach Beendigung des Formvorganges kann der Formfinger 11 über den Kolben 10 durch Anlegen von Unterdruck an den Zylinder 9 oder falls gewünscht auch über eine (nicht dargestellte) Zugfeder aus dem nun geformten Glasrohrende 25 herausgezogen und wie beschrieben in Richtung auf das Karussellinnere zurückgefahren werden.

Der Formfinger 11 kann wie bisher bekannt als gewöhnlicher Zylinder ausgeführt sein, von Vorteil ist jedoch eine Ausgestaltung des Formfingers 11, wie sie in Figur 2a dargestellt ist.

Dieser Formfinger 11 ist ein Teil aus einer ursprünglich zylindrischen Form 30, an der ca. 40 % des hinteren Bereiches 31 und je ca. 7 % der seitlichen Bereiche 32 (die Prozentangaben beziehen sich auf den ursprünglichen Durchmesser der zylindrischen Form 30) abgefräst wurden. Hierdurch ist ein Zylinderausschnitt entstanden, wie er in Figur 2a in Querschnitt dargestellt ist. Dieser Formfinger 11 hat einen Kreisabschnittsbereich 33, der noch die ursprüngliche Aufgabe des Formfingers hat, nämlich die Glättung und Unterstützung (Formung) des Inneren der zu formenden Mündung.

Der Kreisabschnittsbereich 33 überdeckt einen Winkel von ca. 130°, an dem die Formrolle 29 ansetzen und formen kann. Entsprechend dem Winkel von 130° hat der Kreisabschnittsbereich 33 eine Bogenlänge von 2.r.π.130°/360° wobei r der Radius des Kreisabschnittsbereiches ist. An den übrigen Seiten des Formfingers 11 kann keine Formung mehr erfolgen, dieser Formfinger 11 ist daher nur zur Anwendung in Fläschchenmaschinen mit einer Formrolle je Formstation (wie z.B. in Figur 1 dargestellt) bestimmt.

Der vom Kreisabschnittsbereich 33 überdeckte Bereich von ca. 130° eines Vollzylinders richtet sich nach den konstruktiven Gegebenheiten einer jeweils verwendeten Fläschchenmaschine bzw. Formstation.

Soll eine Formung am Formfinger über 180° oder mehr möglich sein, so ist an einem Vollzylinder nur der hintere Bereich 31 abzunehmen. Normalerweise ist jedoch ein Kreisabschnittsbereich 33 von weniger als 180° ausreichend und auch wünschenswert, da durch die Abnahme des hinteren Bereichs 31 und der seitlichen Bereiche 32 der Querschnitt des Formfingers so verkleinert ist, daß er leicht und sogar ohne Berührung des Innenumfanges einer fertig geformten Mündung aus dieser herausgezogen werden kann.

Figur 2b zeigt einen Formfinger 11, dessen Querschnitt eine D₂ₕ-Symmetrie hat. Gegenüber der zylindrischen Form 30 sind nur die seitlichen Bereiche 32 freigefräst. Dieser Formfinger 11 hat zwei Kreisabschnittsbereiche 33 mit einem Winkel von jeweils ca. 135° und wird bei einer Formung mit zwei Formrollen oder bei einer (unten beschriebenen) beweglichen Lagerung des Formfingers verwendet.

Am unteren Ende des Formfingers 11 kann, wie in Figur 3 dargestellt, eine Auflage 34 für einen zu formenden Mündungsrand vorgesehen sein. Diese Auflage 34 hat im wesentlichen die Form einer zylindrischen Scheibe 35 mit größerem Durchmesser als die zylindrische Form 30 und ist konzentrisch zu dieser angeordnet. Die zylindrische Scheibe 35 hat unterhalb des Kreisabschnittsbereiches 33 eine Aussparung 36, die einen Freiraum für die Formrolle 29 bildet, so daß diese hier näher an den Formfinger 11 dringen kann, als es das Nennmaß des Rollrandaußendurchmessers eines zu formenden Fläschchens ist.

Eine solche Situation ist in Figur 4 dargestellt. Die zylindrische Scheibe 35 ist bei 37 (z.B. mittels einer Schraube) an dem Kolben 10 befestigt. Zwischen dem Kolben 10 und der zylindrischen Scheibe 35 ist eine Ölauffangwanne 38 angeordnet, die über den Formfinger 11 gesprühtes Formöl auffängt und über einen Abfluß 39 zurückleitet.

Die Auflage 34 hat eine zum Zentrum des Formfingers hin abfallende Oberfläche 40, die den oberen Rand einer Fläschchenmündung 41 formt. Die Anschrägung hat einen Winkel von 5° und richtet sich nach dem jeweiligen Verwendungszweck des herzustellenden Fläschchens.

Das Formöl kann über den gesamten Formfinger 11 und die zylindrische Scheibe 35 ablaufen, oder aber auch über Kanäle 42 durch die zylindrische Scheibe hindurch abgeleitet werden.

Während eines Formvorganges wird das gedrehte Glasrohr 5 mittels der Formrolle 29 an seinem Ende 25 gegen den Kreisabschnittsbereichs 33 des Formfinger 11 gedrückt. Die Formrolle 29 weist an ihrem Rand ein Profil 43 auf, dessen nach außen stehender Teil 44 das Glasrohrende 25 gegen den Kreisabschnittsbereich 33 drückt und dabei einen Fläschchenhals 45 formt. Vor einem nach innen stehenden Teil 46 des Profils 43 bildet sich dabei ein etwas dickerer Glaswulst, der in Kontakt mit dem Kreisabschnittsbereich 33 und der schrägen Oberfläche 40 zu einem Bördel- oder Rollrand 47 geformt wird. Bei diesem Formvorgang kann die Formrolle 29 im Bereich der Aussparung 36 etwas näher an den Formfinger 11 dringen, so daß ein kleiner Glasposten 48 in den durch die Aussparung 36 gebildeten freien Raum gedrückt wird. Hierdurch wird gleichzeitig das Nennmaß des Rollrandaußendurchmessers etwas kleiner. Durch das Drehen des Glasrohres 5 wird dieser kleine Glasposten 48 jedoch aus dem Bereich der Aussparung 36 herausgedreht und dabei auf der schrägen Oberfläche 40 glattgebügelt. Durch diese Maßnahme wird erreicht, daß auch bei leicht schwankenden Glasrohrstärken immer eine saubere Mündungsformung gewährleistet ist. Mit der Aussparung 36 wird außerdem erreicht, daß die Formrolle 29 nicht gegen den äußeren Rand der zylindrischen Scheibe 35 gedrückt wird, wobei die Lagerung oder Halterung entweder des Formfingers 11 oder der Formscheibe 29 beschädigt werden könnte.

Für besondere Ausgestaltungen einer Fläschchenmündung kann am oberen Ende des Formfingers 11 ein erweiterter Rand 49 oder Kragen vorgesehen sein, der in dem Fläschchenhals 45 eine Hinterschneidung formt. Dieser Formfinger 11 muß nach der Formung entweder radial versetzt oder schräg aus der fertig geformten Fläschchenmündung 41 herausgezogen werden. Ein solches Herausziehen des Formfingers ist auch sinnvoll wenn kein erweiterter Rand 49 vorgesehen ist, da hierbei der Kreisabschnittsbereich 33 ohne Berührung der Innenwandung der Mündung aus dieser genommen wird.

Ein solches Herausziehen des Formfingers 11 ist nur mit einem Formfinger, wie er in den Figuren 2a, 3 und 4 dargestellt ist, möglich. Der bisher verwendete vollzylindrische Formfinger kann nur in Längsrichtung des Glasrohres aus der fertig geformten Mündung gezogen werden.

Um die vorteilhafte Gestalt des erfindungsgemäßen Formfingers zu erhalten, kann auch anders als dargestellt der hintere Bereich und die seitlichen Bereiche z.B. in der Art eines Ovals abgetragen werden. Dabei sollte eine möglichst große Querschnittsfläche des Formfingers bestehen bleiben, damit die am Kreisabschnittsbereich aufgenommene Wärme schnell abgeführt werden kann.

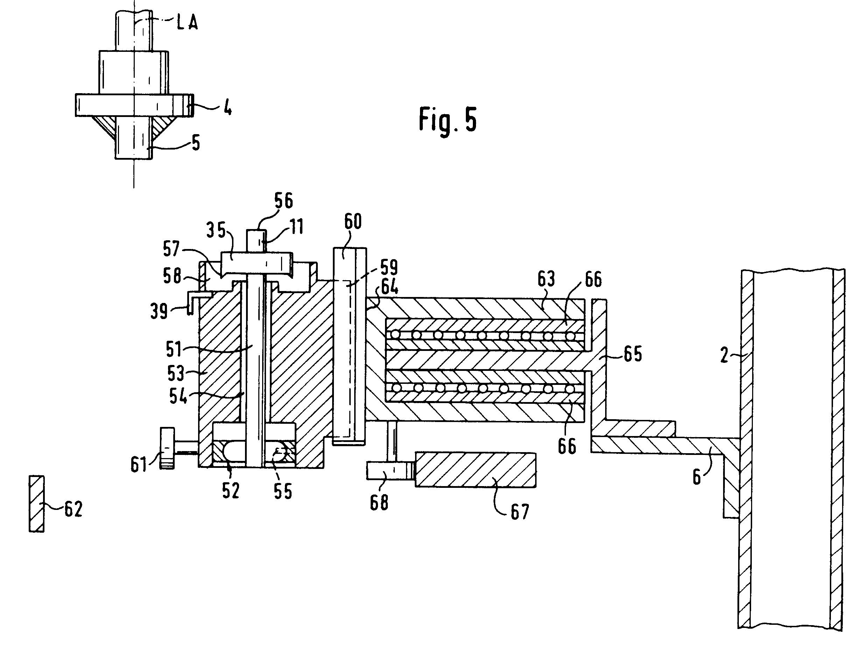

Figur 5 zeigt eine Formfingeranordnung ähnlich wie in Figur 1, jedoch mit anderen Verschiebemitteln, mit denen die gleiche Funktion erreicht wird wie in Figur 1, und einer anderen Formfingeraufhängung.

Der Formfinger 11 ist hier am oberen Ende eines Haltezapfens 51 befestigt, dessen unteres Ende in einem Gelenklager 52 sitzt. Das Gelenklager 52 erlaubt ein horizontales Schwenken des Haltezapfens 51 mit dem darauf befestigten Formfinger 11. Diese horizontale Schwenkbewegung wird durch ein Lagerteil 53 begrenzt, an dessen unterem Ende das Gelenklager 52 sitzt und das eine Bohrung 54 aufweist, in der der Haltezapfen 51 mit ca. ± 0,5 mm Spiel liegt.

Um den Formfinger 11 gegen ein Mitdrehen mit dem Glasrohr 5 zu blockieren, ist in das Gelenklager 52 ein Sperrstift 55 eingesetzt, der ein Schwenken des Gelenklagers 52 und damit auch des Formfingers 11 in der Horizontalebene erlaubt, ein Verdrehen aber verhindert.

Während des Betriebes wird vor einem Einführen des Formfingers 11 in das Glasrohr 5 auf das obere Ende 56 ein Tropfen Formöl gegeben, das einerseits ein Verkleben des Formfingers mit dem wärmeerweichten Glas des Glasrohres 5 verhindert und außerdem auch zur Kühlung des Formfingers 11 beiträgt. Das Formöl kann über die Oberfläche des Formfingers 11 und über die unterhalb des Formfingers 11 angeordnete zylindrische Scheibe 35 abfließen und tropft über eine spitz ausgebildete Kante 57 in eine ringförmig ausgebildete Ölauffangwanne 58 und kann von dort über den Ölablauf 39 an einem zentralen Ort (nicht dargestellt) gesammelt werden.

Der radial bewegliche Formfinger 11 ist über das Lagerteil 53 vertikal verschiebbar. Hierzu sitzt das Lagerteil 53 mit einem parallel zu der Bohrung 54 angeordneten Schwalbenschwanz 59 in einer Schwalbenschwanzführung 60 und ist mittels einer Rolle 61 über eine Kurve 62 in der vertikalen anheb- und wieder absenkbar.

Zur bezüglich der Längsachse LA des Glasrohres 5 radialen Verschiebung des Formfingers 11 ist ein Horizontalschlitten 63 vorgesehen, der an seiner Stirnfläche 64 die Schwalbenschwanzführung 60 trägt und selbst von einem Trägerteil 65 gehalten wird, das mit der mittleren Ebene 6 des Karussells 2 verbunden ist.

Zwischen dem Trägerteil 65 und dem Horizontalschlitten 63 sind zwei Linearwälzführungen 66 angeordnet, die ein Verschieben des Formfingers 11 von seiner Ruheposition bis zu der Längsachse LA des Glasrohres 5 erlauben. Die Verschiebung erfolgt dabei über eine Kurve 67, die eine mit dem Horizontalschlitten 63 verbundene Rolle 68 führt. Die Rückführung des Horizontalschlittens 63 kann entweder mittels einer (nicht dargestellten) Rückholfeder oder über eine (nicht dargestellte) weitere Kurve erfolgen.

## Patentansprüche

1. Vorrichtung (1) zum Formen eines Mündungsbereiches an einem offenen, wärmeerweichten Ende (25) eines Glasrohres (5), mit einem Karussell (2), das eine Vielzahl von sich um ihre eigene Längsachse (LA) drehbaren Glasrohren trägt und dabei in gleichem Teilungsabstand voneinander auf einer gemeinsamen Kreisbahn an einer Formstation vorbeiführt, die mittels einer Formrolle (29) die Enden der Glasrohre sukzedan einrollt, und Formfinger (11), die zur Formung in die wärmeerweichten Enden der Glasrohre einbringbar und danach aus diesen wieder herausziehbar und zur Unterstützung der Glasrohrenden während des Einrollvorganges vorgesehen sind, wobei jedem Glasrohr ein Formfinger zugeordnet und jeder Formfinger auf dem Karussell angeordnet ist, dadurch gekennzeichnet, daß jeder Formfinger (11) auf zwei Schlitten (7, 10) angebracht ist, mittels derer der Formfinger (11) in radialer und in Längsrichtung zu der Längsachse (LA) des zugeordneten Glasrohres (5) verschiebbar ist.

2. Vorrichtung nach Anspruch 1, dadurch gekennzeichnet, daß der Formfinger (11) sich in der einen Endposition des einen Schlittens (7) auf der Längsachse (LA) des zugeordneten Glasrohres (5) und in der einen Endposition des anderen Schlittens (10) im Inneren des Glasrohrendes (25) in Höhe der Formrolle (29) befindet.

3. Vorrichtung nach Anspruch 1 oder 2, dadurch gekennzeichnet, daß der Formfinger (11) ein horizontales Spiel aufweist.

4. Vorrichtung nach Anspruch 3, dadurch gekennzeichnet, daß der Formfinger (11) auf einem Gelenklager (52) angeordnet ist.

5. Vorrichtung nach Anspruch 4, dadurch gekennzeichnet, daß der Formfinger (11) auf dem einen Ende eines Haltezapfens (51) sitzt, dessen unteres Ende mit dem Gelenklager (52) verbunden ist.

6. Vorrichtung nach Anspruch 5, dadurch gekennzeichnet, daß der Haltezapfen (51) zur Begrenzung seines Schwenkradiusses in einer Führung (54) liegt.

7. Vorrichtung nach einem der Ansprüche 3 bis 6, dadurch gekennzeichnet, daß der Formfinger eine horizontale Bewegungsfreiheit von maximal ± 1,0 mm, vorzugsweise bis zu ± 0,5 mm hat.

8. Vorrichtung nach Anspruch 7, dadurch gekennzeichnet, daß das Lagerteil (53) über eine Führung (59, 60) an der Frontseite eines Horizontalschlittens (63) angeordnet ist.

9. Vorrichtung nach einem der Ansprüche 3 bis 8, dadurch gekennzeichnet, daß unterhalb des Formfingers (11) eine Ölauffangwanne (58) mit einem Ölablauf (39) vorgesehen ist.

10. Vorrichtung nach einem der Ansprüche 3 bis 9, dadurch gekennzeichnet, daß der Formfinger (11) die Form eines beidseitig abgeflachten Zylinders mit zwei verbliebenen Kreisabschnittsbereichen (33) von 100° bis 150° hat.

11. Vorrichtung nach einem der Ansprüche 1 bis 10, dadurch gekennzeichnet, daß der Formfinger (11) mindestens einen Kreisabschnittsbereich (33) aufweist, der in Kontakt mit einem Innenumfang des Mündungsbereiches kommt und den Innenradius der Mündung (41) bestimmt, und daß der Formfinger (11) ein Verhältnis seiner Querschnittsfläche zur Bogenlänge seines/r Kreisabschnittsbereichs/e (33) von ≧ 0,55·r hat, wobei r der Radius des Kreisabschnittsbereiches (33) ist.

12. Vorrichtung nach Anspruch 11, dadurch gekennzeichnet, daß die Querschnittsfläche des Formfingers (11) ≧ 0,5.r².π ist.

13. Vorrichtung nach Anspruch 11 oder 12, dadurch gekennzeichnet, daß der Kreisabschnittsbereich (33) über 60° bis 190° eines Zylinders verläuft.

14. Vorrichtung nach Anspruch 13, dadurch gekennzeichnet, daß der Kreisabschnittsbereich (33) über 100° bis 150° verläuft.

15. Vorrichtung nach einem der Ansprüche 11 bis 14, dadurch gekennzeichnet, daß der Formfinger (11) eine zum Kreisabschnittsbereich (33) konzentrisch angeordnete zylindrische Scheibe (35) aufweist, die als Auflage (34) für das Glasrohrende (25) dient und die eine kreisförmige Umfangsfläche aufweist, deren Radius größer ist als der Radius des Kreisabschnittsbereiches (33).

16. Vorrichtung nach Anspruch 15, dadurch gekennzeichnet, daß die Auflage (34) eine zum Zentrum hin abfallende Oberfläche hat.

17. Vorrichtung nach Anspruch 15 oder 16, dadurch gekennzeichnet, daß die Umfangsfläche an dem der Formrolle (29) entgegengerichteten Bereich eine Aussparung (36) aufweist.

18. Vorrichtung nach einem der Ansprüche 11 bis 17, dadurch gekennzeichnet, daß der Formfinger (11) am oberen Ende seines Kreisabschnittsbereiches (33) einen nach außen stehenden Rand (49) aufweist

## Claims

1. Apparatus (1) for shaping a mouth region on an open, heat-softened end (25) of a glass tube (5), having a carousel (2) which carries a multiplicity of glass tubes rotatable about their own longitudinal axis (LA) and leads them, with equal mutual spacing, on a common circular path past a shaping station which rolls in the ends of the glass tubes successively by means of a shaping roller (29), and shaping fingers (11) which can be introduced into the heat-softened ends of the glass tubes for the shaping and then withdrawn from said ends again and are intended for supporting the glass-tube ends during the rolling-in operation, each glass tube being assigned one shaping finger and each shaping finger being arranged on the carousel, characterised in that each shaping finger (11) is mounted on two slides (7, 10), by means of which the shaping finger (11) is displaceable in the radial and longitudinal direction with respect to the longitudinal axis (LA) of the assigned glass tube (5).

2. Apparatus according to Claim 1, characterised in that the shaping finger (11) is situated, in one end position of one slide (7), on the longitudinal axis (LA) of the assigned glass tube (5) and is situated, in one end position of the other slide (10), in the inside of the glass-tube end (25) at the height of the shaping roller (29).

3. Apparatus according to Claim 1 or 2, characterised in that the shaping finger (11) exhibits horizontal play.

4. Apparatus according to Claim 3, characterised in that the shaping finger (11) is arranged on a pivoting bearing (52).

5. Apparatus according to Claim 4, characterised in that the shaping finger (11) is seated on one end of a holding pin (51), the lower of which is connected to the pivoting bearing (52).

6. Apparatus according to Claim 5, characterized in that the holding pin (51) is located in a guide (54) to limit its pivoting radius.

7. Apparatus according to one of Claims 3 to 6, characterized in that the shaping finger has a horizontal freedom of movement of at most ± 1.0 mm, preferably up to ± 0.5 mm.

8. Apparatus according to Claim 7, characterized in that the bearing part (53) is arranged, via a guide (59, 60), on the front side of a horizontal slide (63).

9. Apparatus according to one of Claims 3 to 8, characterized in that an oil-collecting trough (58) having an oil outlet (39) is provided underneath the shaping finger (11).

10. Apparatus according to one of Claims 3 to 9, characterized in that the shaping finger (11) has the shape of a cylinder flattened on both sides, with two remaining circular-segment regions (33) of 100° to 150°.

11. Apparatus according to one of Claims 1 to 10, characterized in that the shaping finger (11) has at least one circular-segment region (33) which comes into contact with an inner circumference of the mouth region and defines the inner radius of the mouth (41), and in that the shaping finger (11) has a ratio of its cross-sectional area to the arc length of its circular-segment region(s) (33) of ≧ 0.55·r, where r is the radius of the circular-segment region (33).

12. Apparatus according to Claim 11, characterized in that the cross-sectional area of the shaping finger (11) is ≧ 0.5·r²·π.

13. Apparatus according to Claim 11 or 12, characterized in that the circular-segment region (33) runs over 60° to 190° of a cylinder.

14. Apparatus according to Claim 13, characterized in that the circular-segment region (33) runs over 100° to 150°.

15. Apparatus according to one of Claims 11 to 14, characterised in that the shaping finger (11) has a cylindrical disc (35) which is arranged concentrically with the circular-segment region (33), serves as a support (34) for the glass-tube end (25) and has a circular circumferential surface whose radius is greater than the radius of the circular-segment region (33).

16. Apparatus according to Claim 15, characterized in that the support (34) has an upper surface which descends towards the centre.

17. Apparatus according to Claim 15 or 16, characterized in that the circumferential surface has a recess (36) in the region directed opposite the shaping roller (29).

18. Apparatus according to one of Claims 11 to 17, characterised in that the shaping finger (11) has an outwardly projecting edge (49) at the upper end of its circular-segment region (33).

## Revendications

1. Dispositif (1) pour le formage d'une zone d'embouchure sur une extrémité (25) ouverte, ramollie par la chaleur, d'un tube de verre (5), comprenant un carrousel (2) qui porte une multitude de tubes de verre susceptibles de tourner autour de leur propre axe longitudinal (LA) et fait passer ces tubes, à des intervalles égaux les uns des autres, sur une trajectoire commune à un poste de formage auquel les extrémités des tubes de verre sont roulées successivement au moyen d'un galet de formage (29), et des doigts de formage (11) gui peuvent être engagés dans les extrémités ramollies des tubes de verre en vue du formage et être ensuite retirés de ces extrémités et qui sont prévus pour soutenir les extrémités des tubes de verre pendant l'opération de roulage, un doigt de formage étant associé à chaque tube de verre et chaque doigt de formage étant disposé sur le carrousel, caractérisé par le fait que chaque doigt de formage (11) est monté sur deux chariots (7, 10) à l'aide desquels le doigt de formage (11) est déplaçable en translation aussi bien radialement qu'en direction longitudinale par rapport à l'axe longitudinal (LA) du tube de verre (5) associé.

2. Dispositif suivant la revendication 1, caractérisé par le fait que le doigt de formage (11) se trouve dans l'une des positions extrêmes de l'un des chariots (7) sur l'axe longitudinal (LA) du tube de verre associé (5) et dans l'une des positions extrêmes de l'autre chariot (10) à l'intérieur de l'extrémité (25) du tube de verre, au niveau du galet de formage (29).

3. Dispositif suivant la revendication 1 ou 2, caractérisé par le fait que le doigt de formage (11) présente un jeu horizontal.

4. Dispositif suivant la revendication 3, caractérisé par le fait que le doigt de formage (11) est disposé sur un palier d'articulation ou à rotule (52).

5. Dispositif suivant la revendication 4, caractérisé par le fait que le doigt de formage (11) est monté sur une extrémité d'un axe de support (51) dont l'extrémité inférieure est reliée au palier d'articulation (52).

6. Dispositif suivant la revendication 5, caractérisé par le fait que l'axe de support (51) est disposé dans un guide (54) en vue de la limitation de son rayon de pivotement.

7. Dispositif suivant l'une des revendications 3 à 6, caractérisé par le fait que le doigt de formage présente une liberté de mouvement horizontal de ± 1,0 mm au maximum, de préférence jusqu'à ± 0,5 mm.

8. Dispositif suivant la revendication 7, caractérisé par le fait que la partie de palier (53) est disposée par une glissière (59, 60) sur le côté frontal d'un chariot horizontal (63).

9. Dispositif suivant l'une des revendications 3 à 8, caractérisé par le fait qu'une cuvette de récupération d'huile (58) avec une sortie d'évacuation d'huile (39) est prévue en dessous du doigt de formage (11).

10. Dispositif suivant l'une des revendications 3 à 9, caractérisé par le fait que le doigt de formage (11) présente la forme d'un cylindre comportant des méplats opposés entre lesquels subsistent deux zones (33) en segment de cercle de 100° à 150°.

11. Dispositif suivant l'une des revendications 1 à 10, caractérisé par le fait que le doigt de formage (11) présente au moins une zone (33) en segment de cercle qui entre en contact avec un pourtour intérieur de la zone d'embouchure et détermine le rayon intérieur de l'embouchure (41), et que le doigt de formage (11) présente un rapport de sa section par la longueur d'arc de sa zone (33) en segment de cercle supérieur ou égal à 0,55.r, r étant le rayon de la zone (33) en segment de cercle.

12. Dispositif suivant la revendication 11, caractérisé par le fait que la section du doigt de formage (11) est supérieure ou égale à 0,5.r².π.

13. Dispositif suivant la revendication 11 ou 12, caractérisé par le fait que la zone (33) en segment de cercle s'étend sur 60° à 190° d'un cylindre.

14. Dispositif suivant la revendication 13, caractérisé par le fait que la zone (33) en segment de cercle s'étend sur 100° à 150°.

15. Dispositif suivant l'une des revendications 11 à 14, caractérisé par le fait que le doigt de formage (11) présente un disque cylindrique (35) qui est disposé concentriquement à la zone (33) en segment de cercle, qui sert d'appui (34) pour l'extrémité (25) du tube de verre et qui présente une surface périphérique circulaire dont le rayon est supérieur au rayon de la zone (33) en segment de cercle.

16. Dispositif suivant la revendication 15, caractérisé par le fait que l'appui (34) présente une surface en pente descendante vers le centre.

17. Dispositif suivant la revendication 15 ou 16, caractérisé par le fait que la surface périphérique présente une échancrure (35) dans la zone opposée au galet de formage (29).

18. Dispositif suivant l'une des revendications 11 à 17, caractérisé par le fait que le doigt de formage (11) présente un bord (49) faisant saillie vers l'extérieur à l'extrémité supérieure de sa zone (33) en segment de cercle.
